# EUROPEAN PATENT APPLICATION

(11) **EP 4 530 085 A1**
(43) Date of publication of application: **02.04.2025**
(21) Application number: 23862104.9
(22) Date of filing: 02.08.2023
(51) Int. Cl.: B41M 3/14

(54) **ANTI-COUNTERFEITING FEATURE MISALIGNED PRINTING ANTI-COUNTERFEITING METHOD, IDENTIFICATION METHOD, SYSTEM AND STORAGE MEDIUM**

(30) Priority: 09.09.2022 CN 202211099765
(71) Applicant: Song, Haimei, Nanjing, Jiangsu 210012 (CN)
(72) Inventor: Song, Haimei, Nanjing, Jiangsu 210012 (CN)
(74) Representative: Lermer, Christoph
(86) International application number: PCT/CN2023/110742
(87) International publication number: WO 2024/051404

(57) **Abstract**

An anti-counterfeiting feature misaligned printing anti-counterfeiting method, an identification method, a system and a storage medium. The anti-counterfeiting method comprises: acquiring N anti-counterfeiting feature sets, the anti-counterfeiting feature sets comprising anti-counterfeiting feature elements, and the anti- counterfeiting feature elements in any anti-counterfeiting feature set being different from each other; and setting the N anti-counterfeiting feature sets on a target object, positions of the anti-counterfeiting feature elements on the target object being different. The anti-counterfeiting method facilitates achieving the effect of target objects all having different anti-counterfeiting features.

## Description

### Technical Field

This application relates to the field of anti-counterfeiting technology. In particular to an anti-counterfeiting feature misaligned printing , anti-counterfeiting method, an identification method, a system and a storage medium.

### Background Art

At present, when anti-counterfeiting is carried out on the product, the target object with anti-counterfeiting identification is generally set on the product, with the improvement of counterfeiting technology in today's society, and the target object with anti-counterfeiting logo can be faked everywhere to achieve shoddy or counterfeit products.

In the relevant technology, it is used to improve the difficulty of anti-counterfeiting marks and reduce the copy of the target object. However, the anti-counterfeiting mark on the target object is immutable, and it is difficult to copy the anti-counterfeiting mark by technical means, and the cost is high, which is not conducive to mass production.

In view of the above related technologies, the applicant believes that there are anti-counterfeiting marks immutable and easy to copy, causing poor anti- counterfeiting effect of the target object. This problem urgently needs to be solved.

### Contents of Invention

In order to improve the anti-counterfeiting effect of the target object, and increase the difficulty of imitating the target object, this application provides an anti-counterfeiting feature misaligned printing, anti-counterfeiting method, an identification method, a system and a storage medium.

The invention provides an anti-counterfeiting method, an identification method, a system and a storage medium for the anti-counterfeiting features of misplaced printing, including the following technical solutions:
First, this application provides an anti-counterfeiting method of misplacement printing anti-counterfeiting features, including the following steps:
Obtaining N anti-counterfeiting feature sets, the anti-counterfeiting feature sets comprising anti-counterfeiting feature elements, and the anti-counterfeiting feature elements in any anti-counterfeiting feature set being different from each other;
**Setting** the N anti-counterfeiting feature sets on a target object, positions of the anti-counterfeiting feature elements on the target object being different.

Through the above methods, the anti-counterfeiting feature elements are printed on the target object, and any anti-counterfeiting elements of the target object being different positions. The technical effect achieve the misalignment anti-counterfeiting.
So as to ensure that the anti-counterfeiting elements on each target object are not the same. This methods Increase the difficulty of replicating the target object, ensure the uniqueness of each target, and thus improve the anti-counterfeiting effect of the target.

Preferably, the acquisition of the N-group anti-counterfeiting feature sets includes the following steps:
Obtaining different types of anti-counterfeiting feature elements;
Setting N groups of different elements in anti-counterfeiting feature set;
The anti-counterfeiting feature elements are randomly arranged into N groups of anti-counterfeiting feature sets based on a random arrangement algorithm. Among them, the number of elements in a group's anti-counterfeiting feature set is different, and/or the number of elements in a group's anti-counterfeiting feature set is different.

Through the above methods, each anti-counterfeiting feature element is randomly arranged to form the anti-counterfeiting feature set, through the random arrangement algorithm, which ensures that the number and type of anti-counterfeiting feature elements are the same in each anti-counterfeiting feature set. The method improves the clutter of anti-counterfeiting feature elements, so as to ensure that the anti-counterfeiting feature elements on the target object are different. This method make the re-manufacturing of the target object difficult, and improve the anti-counterfeiting effect of the target object.

Preferably, the different types of anti-counterfeiting feature elements specifically include anti-counterfeiting feature elements with different shapes, colors and patterns.

Through the above methods, different types of anti-counterfeiting feature elements include different shape, color and pattern anti-counterfeiting feature. It make the arrangement and combination of anti-counterfeiting feature elements more diverse.

Preferably, the setting of the N anti-counterfeiting feature sets on the target object specifically comprises the following steps:
Establishing a correlation between different printing rolls and the N group anti-counterfeiting feature sets;
The N groups of anti-counterfeiting feature sets are printed on the target object based on different printing rollers.

Through the above methods, the N groups of anti-counterfeiting feature sets are set on the target object. Firstly, establishing the association relationship between different printing rollers and the N groups of anti-counterfeiting feature sets, and then, printing the N groups of anti-counterfeiting feature sets in the target object are based on different printing rollers. So that the printing of the anti-counterfeiting feature sets and the printing roller are combined. The accuracy of anti-counterfeiting feature set printing on the target object has been improved.

Preferably, the establishing related relationship between the printing roller and N groups of anti-counterfeiting feature sets specifically includes the following steps:
Obtaining the circumference of the printing roller;
The association relationship are established between the circumference of the printing roll and the N anti-counterfeiting feature sets. Wherein, the association relationship includes a positive correlation between the number of anti-counterfeiting feature elements in the N groups of anti-counterfeiting feature sets and the circumference of the printing roll.

Through the above methods, it is convenient for combining the number of anti-counterfeiting feature elements in the anti-counterfeiting feature sets and the circumference of the printing roll. The more the number of anti-counterfeiting feature elements, the longer the circumference of the printing roll.

Preferably, the N anti-counterfeiting feature sets are printed on the target based on different printing rollers, specifically including the following steps:
The anti-counterfeiting feature sets are printed layer by layer and/or synchronously using different printing rollers;
After the printing roller rotates and prints one circle, a set of anti-counterfeiting feature elements in the anti-counterfeiting feature set be printed, and the current anti-counterfeiting feature set is repeatedly printed;
After the current anti-counterfeiting feature set is printed , the next anti-counterfeiting feature set will be printed by the next printing roller. Wherein,
the circumference of the printing rolls are different. When one of the printing rollers rotates for one round of printing, the next printing roller does not print for one round, resulting in misplacement printing.

Secondly, this application provides a method for anti-counterfeiting identification of misplaced printing, as follows:
Obtaining and storing the coordinate information data of the anti-counterfeiting feature elements on the target object;
Comparing the coordinate information data with the standard information data;
If the comparison results are the same, the anti-counterfeiting features on the target object are correct, and the target object is genuine;
If the comparison results are different, the anti-counterfeiting features on the target object are incorrect, and the target object is a counterfeit;

Through the above methods, it is easy to compare the position of the anti-counterfeiting feature elements on the target object that has been printed, and it is easy to determine whether the target object has unique.

Thirdly, This invention also provides a system for misplacement printing anti-counterfeiting identification, including:
Acquisition module, used to obtain different types of anti-counterfeiting feature elements in the anti-counterfeiting feature sets;
A printing module, including a printing roller, is used to print the security feature set onto the target object;
The matching calculation module, used to establish the correlation between the circumference of the printing roll and the N groups of anti-counterfeiting feature sets;
The identification module, used to obtain and store the coordinate information data of the anti-counterfeiting feature element on the target object, and
compares the coordinate information data with the standard information data to identify whether the anti-counterfeiting feature element on the target object matches the preset standard.
Fourthly, this invention provides a computer readable storage medium, as follows:
   A computer readable storage medium, including memory, that store a computer program that load the anti-counterfeiting method of the misaligned printing anti-counterfeiting feature and the identification method.

In summary, this invention includes at least one beneficial technical effects as follows:
The anti-counterfeiting feature elements are printed on the target object, and
the positions of the anti-counterfeiting elements on the target object are different, achieved the effect of misplacement printing. So as to ensure that the anti-counterfeiting elements on each target object are different. This invention increased the difficulty of replicating the target object, ensured the uniqueness of each target object, thus improve the anti-counterfeiting effect on the target object;
The N groups of anti-counterfeiting feature sets are set on the target object.

Firstly, Establishing association relationship between different printing rolls and N group of anti-counterfeiting feature sets , and then printing N groups of anti-counterfeiting feature sets on the target object based on different printing rolls, combine anti-counterfeiting feature printing with printing rollers. This invention improved the accuracy of printing anti-counterfeiting feature sets on the target object.

### Description of Figures

FIG. 1 is the schematic diagramof this embodiment, which mainly embodies the steps of the anti-counterfeiting method with misaligned printing anti-counterfeiting features;
FIG. 2 is a schematic diagram of this embodiment, which mainly embodies the sub step of S1 step;
FIG. 3 is the schematic diagram of this embodiment, which mainly embodies Steps of anti-counterfeiting identification method for misplaced printing anti-counterfeiting features;
FIG. 4 is the flowchart of this embodiment, which mainly embodies the anti-counterfeiting feature system for misplaced printing anti-counterfeiting features.

### Specific Mode for Carrying out the Invention

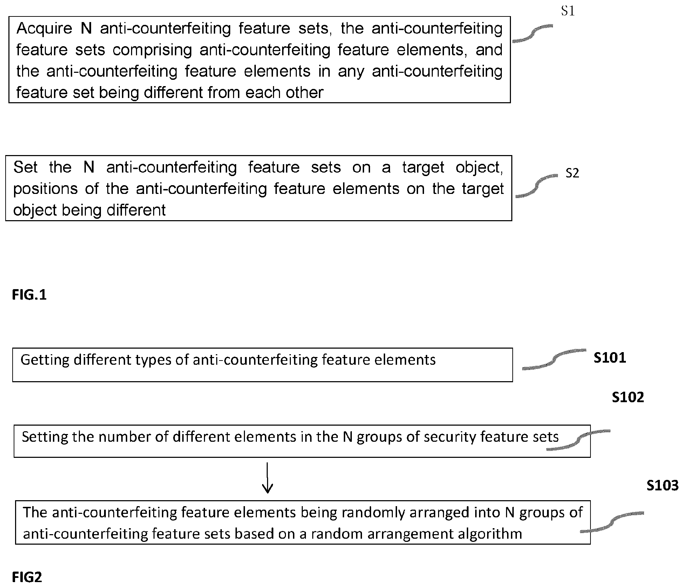

Further detailed description of this invention is provided in conjunction with Figure 1-4.

Example 1, relates to an anti-counterfeiting method for misaligned printing anti-counterfeiting features.

Referring to Figure 1, an anti-counterfeiting method of misplacement printing anti-counterfeiting features includes the following steps:
S1 Acquire N anti-counterfeiting feature sets, the anti-counterfeiting feature sets comprising anti-counterfeiting feature elements, and the anti-counterfeiting feature elements in any anti-counterfeiting feature set being different from each other. In this embodiment, the anti-counterfeiting feature set may be printed.

Wherein, obtaining N groups anti-counterfeiting feature sets includes the following steps:
Referring to Figure 2, S101, Get different types of anti-counterfeiting feature elements. The anti-counterfeiting feature elements specifically include anti-counterfeiting feature elements with different shapes, colors and patterns.

For example, lines of different colors and patterns of different shapes: such as square anti-counterfeiting feature elements, circular anti-counterfeiting feature elements and triangular anti-counterfeiting feature elements, and so on.

S102. Setting the number of different elements in the anti-counterfeiting feature set of N groups.

S103.The anti-counterfeiting feature elements are randomly arranged into N groups of security feature sets based on the random arrangement algorithm; Among these feature sets, the number of elements varies in the anti-counterfeiting feature sets of different groups, and/or, the anti-counterfeiting features in the same group have different elements.

The anti-counterfeiting feature elements are randomly arranged into the anti-counterfeiting feature sets through CPU or manual repeated review. The random arrangement algorithm can be written into CPU,so that the number and type of anti-counterfeiting feature elements in different groups are different, and the diversity of anti-counterfeiting feature elements in the anti-counterfeiting feature sets is improved.

S2 The N anti-counterfeiting feature sets is set on a target object, and positions of the anti-counterfeiting feature elements on the target object are different.

By printing on the target object and placing anti-counterfeiting elements in different positions on the target object, the effect of misalignment of anti-counterfeiting feature elements is achieved.So as to ensure that the anti-counterfeiting elements on each target object are not the same, improve the difficulty of the target object imitation, ensure the uniqueness of each target object, and thus improve the anti-counterfeiting effect on the target object.

Among them, setting N groups of anti-counterfeiting feature sets on the target includes the following steps:
S201. Establishing the correlation between different printing rolls and N anti-counterfeiting feature sets, therein, establishing the correlation between the printing roll and the N anti-counterfeiting feature set includes the following steps: Obtaining the circumference of the printing roll; The association relationship between the circumference of the printing roll and the N group anti-counterfeiting feature sets are established, wherein the association relationship includes a positive correlation between the number of anti-counterfeiting feature elements in the N group anti-counterfeiting feature set and the circumference of the printing roll.

It should be pointed out that the number of printing rolls are dynamically selected based on the number of N anti-counterfeiting feature sets. The circumference of the printing rolls are matched with the number of anti-counterfeiting feature elements corresponding to the anti-counterfeiting feature sets, that is, the more the number of anti-counterfeiting feature elements in the anti-counterfeiting feature sets, the longer the circumference of the printing roll.

S202. The N anti-counterfeiting feature sets are printed on the target object based on different printing rollers. In this application, the printed materials include but are not limited to labels.

Printing N anti-counterfeiting feature sets on the object based on different printing rollers specifically includes the following steps:
Using different printing rollers layer by layer and/or synchronous printing anti-counterfeiting feature sets;
After one rotation of a printing roller, the printing of a set of anti-counterfeiting feature elements in the anti-counterfeiting feature set has been completed, and this current anti-counterfeiting feature set is repeatedly printed;
After the current anti-counterfeiting feature set has been printed, the next printing roll will print the next set of anti-counterfeiting features. wherein the circumference of the printing rolls are different. After a printing roller completes one round of printing, the next printing roller will not print in one circle, in order to achieve misplacement printing.

It should be noted that, If at least four sets of anti-counterfeiting features are adopted. In the first anti-counterfeiting feature set, number of anti-counterfeiting features elements are 80; The second, number of anti-counterfeiting feature elements are 82; The third, number of anti-counterfeiting feature elements are 84, and the fourth, number of anti-counterfeiting feature elements are 86. The printing rollers with circumferences of 80, 82, 84, and 86 can be used, and it corresponds to the anti-counterfeiting feature set. When printing the anti-counterfeiting feature sets on the target object, after the first set of anti-counterfeiting features have been printing, the anti-counterfeiting feature sets of the second to fourth groups have not been printed yet. However, the anti-counterfeiting feature set is printed repeatedly, so when printing on the adjacent target object, the anti-counterfeiting feature element is misplaced. The anti-counterfeiting feature elements on each target object are not the same. This ensures that the anti-counterfeiting feature elements on the target object have uniqueness. After printing the anti-counterfeiting feature set, it can also be achieved through the use of techniques such as hot stamping and wire mesh, realize feature effects that cannot be replicated by traditional printing. This method makes it more difficult to replicate the target object, and improved the anti-counterfeiting effect of the target object.

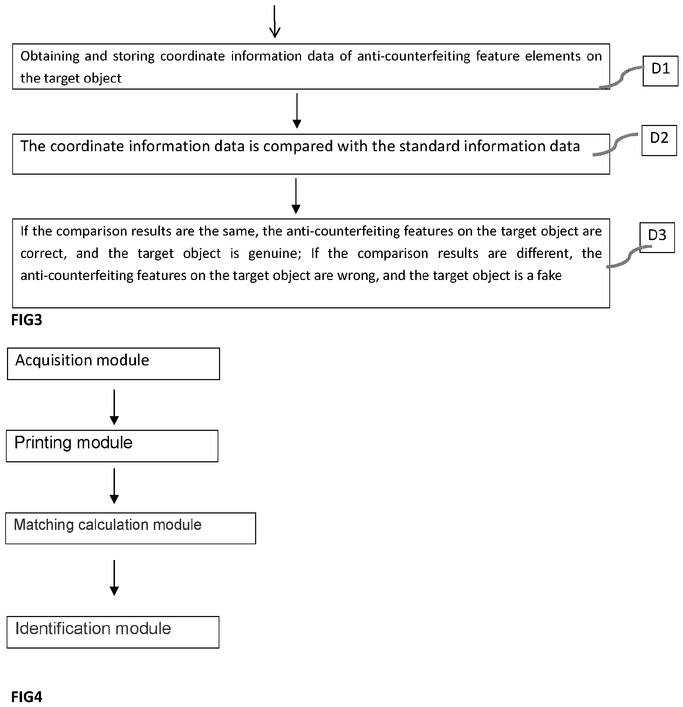

Example 2 of this application, discloses an anti-counterfeiting identification method for misaligned printing anti-counterfeiting features:
Refer to Figure 3, an anti-counterfeiting identification method for misaligned printing anti-counterfeiting features, including the following steps:
D1. Obtaining and storing coordinate information data of anti-counterfeiting feature elements on the target object;
D2. Comparing the coordinate information data with the standard information data;
D3. If the comparison results are the same, the anti-counterfeiting features on the target object are correct, and the target object is quality goods; If the comparison results are different, the anti-counterfeiting features on the target object are wrong, and the target object is a fake goods.

After the printing is completed, by collecting images of the target object and obtaining the position of the anti-counterfeiting feature elements on the target object, the authenticity of the target object can be judged, and the anti-counterfeiting recognition effect of the target object can be improved.

Example 3 of this application, discloses an anti-counterfeiting system with anti-counterfeiting features of misaligned printing;
Refer to Figure 4, an anti-counterfeiting system for misaligned printing anti-counterfeiting features, including:
An obtaining module, is used to obtain different types of anti-counterfeiting feature elements in the anti-counterfeiting feature set;
A printing module, including a printing roller, is used to print the anti-counterfeiting feature set onto the target object;
The matching calculation module, is used to establish the correlation between the circumference of the printing rolls and the N group anti-counterfeiting feature sets;
The identification module, is used to obtain and store the coordinate information data of the anti-counterfeiting feature elements on the target object, and compare the coordinate information data with the standard information data, in order to identify whether the anti-counterfeiting feature elements on the target object match the preset standards.

Example 4 of the present application, discloses a storage medium for misaligned printing anti-counterfeiting features, include a memory, store a computer program loaded with the method. The computer readable storage medium stores a computer program capable of being loaded and executed by the processor for an anti-counterfeiting, identification method using a misaligned printing anti-counterfeiting feature. The computer readable storage medium includes, such as USB flash drive, portable hard drive, Read Only Memory (ROM), Random Access Memory (RAM), disk or optical disc, and so on various media that can store program code.

The above Implementation examples are the preferred embodiment of this application, but do not limit the scope of protection of this application. Therefore, any equivalent changes made in accordance with the structure, shape and principle of this application would be covered by the scope of protection of this application.

## Claims

1. An anti-counterfeiting feature misaligned printing anti-counterfeiting method is **characterized in that** it includes the following steps:
acquiring N group anti-counterfeiting feature sets, the anti-counterfeiting feature set includes anti-counterfeiting feature element, and the anti-counterfeiting feature elements in any anti-counterfeiting feature set being different from each other, and setting the N anti-counterfeiting feature sets on a target object, positions of the anti-counterfeiting feature elements on the target object being different.

2. According to the claim 1, an anti-counterfeiting method of misplacement printing anti-counterfeiting features is **characterized by**: the acquisition of N group anti-counterfeiting feature set consists of the following steps:
Obtaining different types of anti-counterfeiting feature elements;
Setting N groups of different elements in the anti-counterfeiting feature set;
The anti-counterfeiting feature elements are randomly arranged into N groups of anti-counterfeiting feature sets based on a random arrangement algorithm. Among the different groups the number of elements in anti-counterfeiting feature set is different, and/or the elements in an anti-counterfeiting feature set are different.

3. According to the claim 2, an anti-counterfeiting method of misplacement printing anti-counterfeiting features is **characterized in that** the different types of anti-counterfeiting feature elements specifically include anti-counterfeiting feature elements with different shapes, colors and patterns.

4. According to the claim 1, an anti-counterfeiting method of misplacement printing anti-counterfeiting features is **characterized by** the targeted N group anti-counterfeiting feature set is set on the object, including the following steps:
The correlation between different printing rolls and the N group anti-counterfeiting feature set is established.
The N group anti-counterfeiting feature set is printed on the target object based on different printing rollers.

5. According to claim 4, an anti-counterfeiting method for misplacement printing anti-counterfeiting features is **characterized in that** the association relationship between the printing roller and the N group anti-counterfeiting feature set includes the following steps:
Obtaining the circumference of the printing roller;
The association relationship between the circumference of the printing roll and the N group anti-counterfeiting feature set is established, wherein the association relationship includes a positive correlation between the number of anti-counterfeiting feature elements in the N group anti-counterfeiting feature set and the circumference of the printing roll.

6. According to claim 1, an anti-counterfeiting method for misplacement printing anti-counterfeiting features is **characterized in that** the N groups anti-counterfeiting feature set is printed on the target object based on different printing rollers, including the following steps:
The anti-counterfeiting feature set is printed layer by layer and/or synchronously using different printing rollers;
After printing one circumference, the printing roller completes the printing of the anti-counterfeiting feature elements in a set of anti-counterfeiting features, and repeats printing the current set of anti-counterfeiting features.
After the printing of the current set of anti-counterfeiting features is completed, the next printing roller prints the next set of anti-counterfeiting features. The circumferences of the printing rollers are different. After one printing roller prints one circumference, the next printing roller has not printed to one circumference to achieve misplacement printing.

7. A method for identifying anti-counterfeiting features with misplacement printing, **characterized by** the following steps:
Obtaining and storing the coordinate information data of the anti-counterfeiting feature elements on the target object;
Comparing the coordinate information data with the standard information data;
If the comparison result is the same, the anti-counterfeiting features on the target object are correct, and the target object is authentic; if the comparison result is different, the anti-counterfeiting features on the target object are incorrect, and the target object is a fake.

8. An anti-counterfeiting system with misplacement printing anti-counterfeiting features, **characterized by** including:
An acquisition module for obtaining different types of anti-counterfeiting feature elements in the anti-counterfeiting feature set;
A printing module, including a printing roller, for printing the anti-counterfeiting feature set onto the target object;
A matching calculation module for establishing an association relationship between the circumference of the printing roller and the N sets of anti-counterfeiting feature sets;
An identification module for obtaining and storing the coordinate information data of the anti-counterfeiting feature elements on the target object, and comparing the coordinate information data with the standard information data to identify whether the anti-counterfeiting feature elements on the target object match the preset standard.

9. A computer-readable storage medium, **characterized by** including a memory storing a computer program that loads the method described in Claims 1-7 above.
